# EUROPEAN PATENT APPLICATION

(11) **EP 2 953 122 A1**
(43) Date of publication of application: **09.12.2015**
(21) Application number: 15170396.4
(22) Date of filing: 03.06.2015
(51) Int. Cl.: G09G 3/20, G06T 5/00

(54) **METHOD AND APPARATUS FOR PROCESSING IMAGES**

(30) Priority: 03.06.2014 KR 20140067469
(71) Applicant: Samsung Electronics Co., Ltd, Gyeonggi-do 443-742 (KR)
(72) Inventor: Jin, Youngtae, 443-742 Gyeonggi-do (KR); Choi, Minsoo, 443-742 Gyeonggi-do (KR); Kim, Kichul, 443-742 Gyeonggi-do (KR); Woo, Moonyoung, 443-742 Gyeonggi-do (KR); Choi, Sunmuk, 443-742 Gyeonggi-do (KR)
(74) Representative: Nederlandsch Octrooibureau

(57) **Abstract**

Disclosed are a method and an apparatus for processing images in an electronic device having a bendable or flexible display. A method for processing images may include identifying a degree of bending of the display (565); and generating and outputting through the display an adjustment image by changing at least a part of a provision image (515) otherwise output through the display in a reference state such as an unbent state, where the change is based on the degree of bending. The method and apparatus may reduce or eliminate distortion otherwise perceived by a user when one or more parts of the display is bent or curved.

## Description

### BACKGROUND

### 1. Technical Field

Various embodiments of the present disclosure relate generally to an electronic device, and more particularly, to a method and apparatus for processing images in a flexible or bendable display device.

### 2. Description of the Related Art

Recently, electronic devices for consumers have been developed into various forms including wearable devices, which the user can wear on his or her body part or which can be transplanted into the same. Such devices include smart watches, head-mounted displays (HMT) (e.g., electronic glasses), electronic clothes, or electronic tattoos, as well as hand-held devices such as tablet computers, smart phones, and the like. These versatile electronic devices have adopted various kinds of displays, such as flat displays, round displays, partially bent (or bendable) displays (e.g., curved displays), or flexible displays.

Such devices may provide visual information through the partially bent (or bendable) display included therein. For example, an electronic device may provide visual information to the user through a flat area or a bent area of the display.

### SUMMARY

According to the prior art, in the case of providing images through a bendable display, the area recognized by the user in a bent or curved area of the display may be perceived smaller than the actual area thereof according to a degree of bending. Since the image provided through the display's bent area is recognized by the user through the perceived smaller area than the actual area of the display, the image may appear distorted to the user. For example, in the image output on the display, a partial image corresponding to the bent area of the display may look distorted to the user, according to the degree of bending of the display. Recognizing this problem, various embodiments disclosed herein may provide a method and an apparatus which provide an image corrected according to the degree of bending of the display to improve the distorted image.

In various embodiments, a method for processing an image by an electronic device having a display may include: identifying a degree of bending of the display; and generating and outputting through the display an adjustment image by changing at least a part of a provision image otherwise output through the display in a reference state such as an unbent state. The change in the provision image may be based on the degree of bending.

The method and the apparatus for processing images, according to various embodiments, may alter the image to be provided through at least a partial area of the display, based on the degree of bending of at least a partial area of the display, to thereby reduce the distortion of the image. In addition, the method and the apparatus for processing images, according to various embodiments, may correct the image to be provided according to the degree of bending of the display to thereby prevent the image (e.g., at least a part of the image to be provided through the bent area of the display) from being perceived distorted by the user.

### BRIEF DESCRIPTION OF THE DRAWINGS

The above and other aspects, features and advantages of certain embodiments of the present disclosure will be more apparent from the following detailed description in conjunction with the accompanying drawings, in which:
FIG. 1 illustrates a network environment including an electronic device, according to various embodiments of the present disclosure;
FIG. 2 illustrates an example of an electronic device according to various embodiments of the present disclosure;
FIG. 3 illustrates an example in which an electronic device provides an image to a user through a bent display;
FIG. 4 illustrates an example in which an electronic device changes an image that is to be presented through a display, according to various embodiments of the present disclosure;
FIG. 5 illustrates a relationship between an adjustment image, a provision image, a display bending state, and a user's viewing area, according to various embodiments of the present disclosure;
FIG. 6 illustrates an example in which an electronic device provides an image through a display, according to various embodiments of the present disclosure;
FIG. 7 illustrates a flowchart to show a method of processing an image by an electronic device, according to various embodiments of the present disclosure;
FIG. 8 illustrates a flowchart to show a method of processing an image by an electronic device, according to various embodiments of the present disclosure; and
FIG. 9 illustrates a block diagram of an electronic device according to various embodiments of the present disclosure.

### DETAILED DESCRIPTION

Hereinafter, exemplary embodiments of the present disclosure are described in detail with reference to the accompanying drawings. While the present disclosure may be embodied in many different forms, specific embodiments of the present disclosure are shown in drawings and are described herein in detail, with the understanding that the present disclosure is to be considered as an exemplification of the principles of the invention and is not intended to limit the invention to the specific embodiments illustrated. The same reference numbers are used throughout the drawings to refer to the same or like parts.

The expressions such as "include" and "may include" which may be used in the present disclosure denote the presence of the disclosed functions, operations, and constituent elements and do not limit one or more additional functions, operations, and constituent elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween. The terms used in the present disclosure are only used to describe specific various embodiments, and are not intended to limit the present disclosure. As used herein, the singular forms are intended to include the plural forms as well, unless the context clearly indicates otherwise. Singular forms are intended to include plural forms unless the context clearly indicates otherwise.

An electronic device according to the present disclosure may be a device including a communication function. For example, the device corresponds to a combination of at least one of a smartphone, a tablet Personal Computer (PC), a mobile phone, a video phone , an e-book reader, a desktop PC, a laptop PC, a netbook computer, a Personal Digital Assistant (PDA), a Portable Multimedia Player (PMP), a digital audio player, a mobile medical device, an electronic bracelet, an electronic necklace, an electronic accessory, a camera, a wearable device, an electronic clock, a wrist watch, home appliances (for example, an air-conditioner, vacuum, an oven, a microwave, a washing machine, an air cleaner, and the like), an artificial intelligence robot, a TeleVision (TV), a Digital Video Disk (DVD) player, an audio device, various medical devices (for example, Magnetic Resonance Angiography (MRA), Magnetic Resonance Imaging (MRI), Computed Tomography (CT), a scanning machine, a ultrasonic wave device, or the like), a navigation device, a Global Positioning System (GPS) receiver, an Event Data Recorder (EDR), a Flight Data Recorder (FDR), a set-top box, a TV box (for example, Samsung HomeSyncTM, Apple TVTM, or Google TVTM), an electronic dictionary, vehicle infotainment device, an electronic equipment for a ship (for example, navigation equipment for a ship, gyrocompass, or the like), avionics, a security device, electronic clothes, an electronic key, a camcorder, game consoles, a Head-Mounted Display (HMD), a flat panel display device, an electronic frame, an electronic album, furniture or a portion of a building/structure that includes a communication function, an electronic board, an electronic signature receiving device, a projector, and the like. It is obvious to those skilled in the art that the electronic device according to the present disclosure is not limited to the aforementioned devices.

Hereinafter, an electronic device according to various embodiments of the present disclosure will be described with reference to the accompanying drawings. In various embodiments, the term "user" may indicate a person using an electronic device or a device (e.g. an artificial intelligence electronic device) using an electronic device.

Herein, when a display is said to be bent, it may be bent along a single linear section to form two or more planar display sections, as in a folded notebook computer, or, it may be bent at multiple sections or substantially continuously along a certain length to form a curve. Thus a "bent" display as used herein may also encompass a display that has a curved portion.

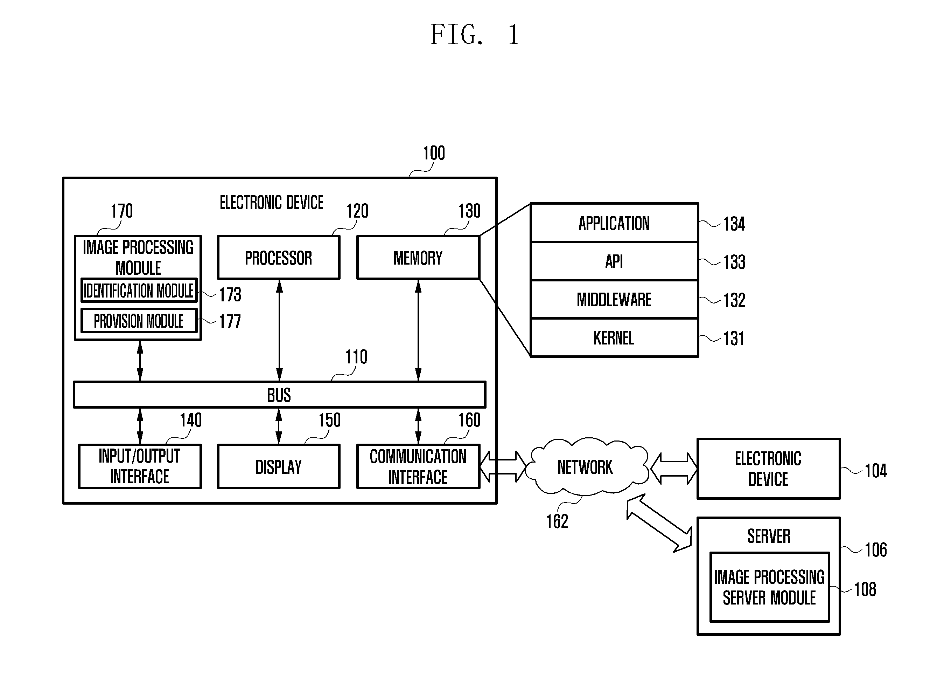

FIG. 1 illustrates a network environment including an electronic device, 100, according to various embodiments of the present disclosure. Electronic device 100 may include a bus 110, a processor 120, a memory 130, an input/output interface 140, a display 150, a communication interface 160, and an image processing module 170. The bus 110 may be a circuit which connects the above-mentioned components with each other, and may transfer communications (e.g., control messages) between the components.

The bus 110 may be a circuit which interconnects the above-described elements and delivers a communication (e.g., a control message) between the above-described elements.

The processor 120 may receive commands from the above-described other elements (e.g., the memory 130, input/output interface 140, the display module 150, the communication module 160, the image processing module 170, etc.) through the bus 110, may interpret the received commands, and may execute calculation or data processing according to the interpreted commands.

The memory 130 may store therein commands or data received from or created at the processor 120 or other elements (e.g., the input/output interface 140, the display 150, the communication interface 160, or the image processing module 170, etc.). The memory 130 may include programming modules such as a kernel 131, a middleware 132, an application programming interface (API) 133, and an application 134. Each of the programming modules may be composed of software, firmware, hardware, and any combination thereof.

The kernel 131 may control or manage system resources (e.g., the bus 110, the processor 120, or the memory 130, etc.) used for performing operations or functions of the other programming modules, e.g., the middleware 132, the API 133, or the application 134. Additionally, the kernel 131 may offer an interface that allows the middleware 132, the API 133 or the application 134 to access, control or manage individual elements of the electronic device 101.

The middleware 132 may perform intermediation by which the API 133 or the application 134 communicates with the kernel 131 to transmit or receive data. Additionally, in connection with task requests received from the applications 134, the middleware 132 may perform a control (e.g., scheduling or load balancing) for the task request by using technique such as assigning the priority for using a system resource of the electronic device 100 (e.g., the bus 110, the processor 120, or the memory 130, etc.) to at least one of the applications 134.

The API 133 which is an interface for allowing the application 134 to control a function provided by the kernel 131 or the middleware 132 may include, for example, at least one interface or function (e.g., a command) for a file control, a window control, an image processing, a text control, and the like.

According to embodiments, the application 134 may include an SMS/MMS application, an email application, a calendar application, an alarm application, a health care application (e.g., an application for measuring quantity of motion or blood sugar), an environment information application (e.g., an application for offering information about atmospheric pressure, humidity, or temperature, etc.), and the like. Additionally or alternatively, the application 134 may be an application associated with an exchange of information between the electronic device 100 and any external electronic device (e.g., an external electronic device 104). This type application may include a notification relay application for delivering specific information to an external electronic device, or a device management application for managing an external electronic device.

For example, the notification relay application may include a function to deliver notification information created at any other application of the electronic device 100 (e.g., the SMS/MMS application, the email application, the health care application, or the environment information application, etc.) to an external electronic device (e.g., the electronic device 104). Additionally or alternatively, the notification relay application may receive notification information from an external electronic device (e.g., the electronic device 104) and offer it to a user. The device management application may manage (e.g., install, remove or update) a certain function (a turn-on/turn-off of an external electronic device (or some components thereof), or an adjustment of brightness (or resolution) of a display) of any external electronic device (e.g., the electronic device 104) communicating with the electronic device 100, a certain application operating at such an external electronic device, or a certain service (e.g., a call service or a message service) offered by such an external electronic device.

According to embodiments, the application 134 may include a specific application specified depending on attributes (e.g., a type) of an external electronic device (e.g., the electronic device 104). For example, in case an external electronic device is an MP3 player, the application 134 may include a specific application associated with a play of music. Similarly, in case an external electronic device is a portable medical device, the application 134 may include a specific application associated with a health care. In an embodiment, the application 134 may include at least one of an application assigned to the electronic device 100 or an application received from an external electronic device (e.g., the server 106 or the electronic device 104).

The input/output interface 140 may deliver commands or data, entered by a user through an input/output unit (e.g., a sensor, a keyboard, or a touch screen), to the processor 120, the memory 130, the communication interface 160, or the application control module 170 via the bus 110. For example, the input/output interface 140 may offer data about a user's touch, entered through the touch screen, to the processor 120. Also, through the input/output unit (e.g., a speaker or a display), the input/output interface 140 may output commands or data, received from the processor 120, the memory 130, the communication interface 160, or the application control module 170 via the bus 110. For example, the input/output interface 140 may output voice data, processed through the processor 120, to a user through the speaker.

The display 150 may display thereon various kinds of information (e.g., multimedia data, text data, etc.) to a user.

The communication interface 160 may perform a communication between the electronic device 100 and any external electronic device (e.g., the electronic device 104 of the server 106). For example, the communication interface 160 may communicate with any external device by being connected with a network 162 through a wired or wireless communication. A wireless communication may include, but not limited to, at least one of WiFi (Wireless Fidelity), BT (Bluetooth), NFC (Near Field Communication), GPS (Global Positioning System), or a cellular communication (e.g., LTE, LTE-A, CDMA, WCDMA, UMTS, WiBro, or GSM, etc.). A wired communication may include, but not limited to, at least one of USB (Universal Serial Bus), HDMI (High Definition Multimedia Interface), RS-232 (Recommended Standard 232), or POTS (Plain Old Telephone Service).

According to an embodiment, the network 162 may be a communication network, which may include at least one of a computer network, an internet, the World Wide Web, an internet of things, or a telephone network. According to an embodiment, a protocol (e.g., transport layer protocol, data link layer protocol, or physical layer protocol) for a communication between the electronic device 100 and any external device may be supported by at least one of the application 134, the API 133, the middleware 132, the kernel 131, or the communication interface 160.

According to an embodiment, a server 106 may execute at least one of the operations (or functions) performed by the electronic device 100 so as to support a driving of the electronic device 100. For example, the server 106 may include an image processing server module 108 that is able to support the image processing module 170 adopted by the electronic device 100. For example, the image processing server module 108 may include at least one of the elements of the image processing module 170, and may execute (e.g., substitute) at least one of the operations of the image processing module 170.

The image processing module 170 may process (e.g., adjust) at least some of the information (e.g., images) obtained from other elements (e.g., the processor 120, the memory 130, the input/output interface 140, the communication interface 160, or the like), and may provide the processed information through the display 150. For instance, if the display 150 is bent or curved, the image processing module 170 may correct an image, which is to be displayed through the display 150, according to a degree of bending of the display 150 to thereby provide the corrected image through the display 150. To this end, the image processing module 170 may include an identification module 173 and a provision module 177.

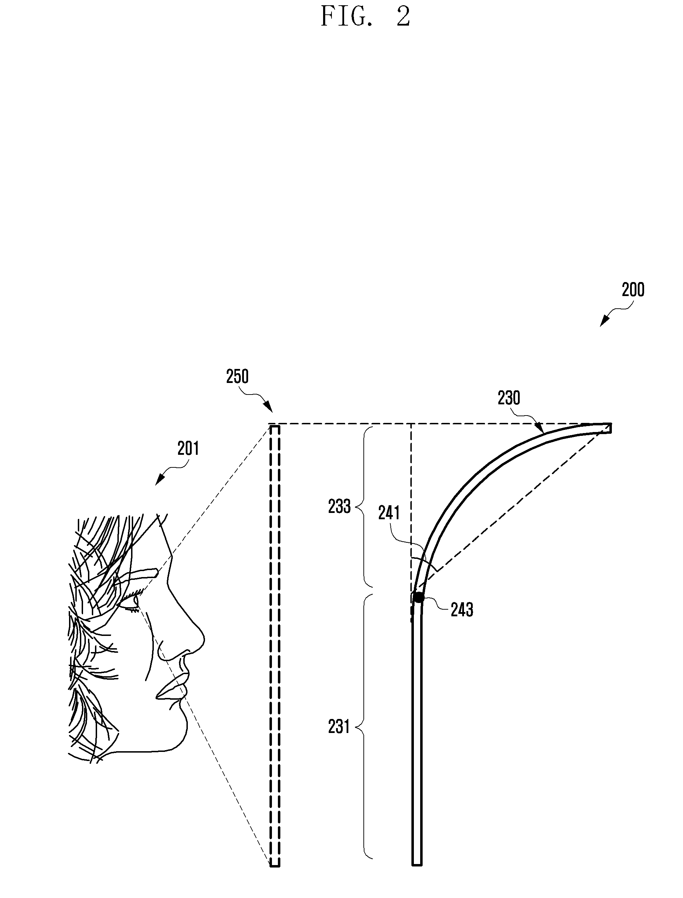

The identification module 173 may identify the degree of bending of the display 150. For instance, if the display 150 is bent or curved, the identification module 173 may identify a reference area and a bent area of the display 150, and may determine the degree of bending (e.g., angles) between the identified reference area and the bent area. For example, the reference area may be the area corresponding to a user (e.g., the line of sight of the user) with respect to the display 150. The bent area, for example, may be a curved portion of the display 150, which is at a specified angle to the reference area. Examples of the reference area and the bent area will be described in more detail later with reference to FIG. 2.

The provision module 177 may provide an image (hereinafter, for convenience of explanation, referred to as an "adjustment image") through the display 150, which is created by adjusting a "normal image" (hereinafter, for convenience of explanation, referred to as a "provision image") to be provided through the display 150 at least in part, based on the degree of bending of the display 150. A provision image may be considered an image that would normally be displayed on a flat display, and which would appear undistorted on the flat display. However, if a portion of the display becomes bent and the provision image is unadjusted, the image viewed in the bent display portion would appear distorted to the viewer. To reduce or eliminate such distortion, the adjustment image may be provided, which may be a corrected version of the provision image. For example, the provision module 177 may provide the adjustment image resulting from the adjustment of the provision image to the user, based on a viewing area corresponding to the display 150, which may vary according to the degree of bending. The viewing area may denote the area of display 150, which is viewable by the user, while the user is viewing the bent display 150. Further description of the viewing area will be made later with reference to FIG. 2.

The provision image or the adjustment image, for example, may be certain data output through the display 150, and it is not limited to a particular form. For example, the provision image may be visual data such as letters, symbols, signs, text, icons, still images including images, videos, 3D videos, or the like. Hereinafter, the image processing module 170 including the identification module 173 and the provision module 177) will be discussed in more detail with reference to FIGs. 2 to 9.

FIG. 2 illustrates an electronic device 200, which is an example of the electronic device 100 of FIG. 1. Device 200 includes a display 230 (an example of the display 150) which may be a device that is bendable or bent at least in part (e.g., a flexible display or a curved display). The display 230 may be deformed automatically or by a user 201. For example, the display 230 may be deformed (e.g., at least a part of the display 230 is bent) automatically by virtue of a material property of the display 230, based on applications executed in device 200. For example, if an email application is executed in the electronic device, the user may bend display 230 at a determined angle (e.g., 90 degrees) in order to split the screen of the display 230 into two parts (e.g., a keyboard screen part and a display screen part for email content). Moreover, when a watch application is executed in the electronic device, the user may deform the display 230 into a cylindrical shape to be worn around the user's wrist. It is noted here that other elements of device 200, such as those shown in FIG. 1, may be disposed behind display 230 in FIG. 2 and/or within another portion (not shown) of device 200.

The display 230 may be deformed (e.g., at least a part of the display 230 is bent) automatically based on the intensity of illumination around the electronic device 200. For example, the display 230 may be transformed from a planar shape into a cylinder shape, based on a low intensity of illumination (e.g., about 10 lux) around the electronic device. In addition, the display 230 may be transformed into a flat plate, based on a high intensity of illumination (e.g., about 100 lux) around the electronic device. Moreover, the display 230 may be directly bent by the user. According to an embodiment, when at least a part of the display 230 is bent automatically or intentionally by the user, the display 230 may remain bent until it is unbent by another user manipulation or automatically due to another condition.

According to an embodiment, the identification module 173 may identify the degree of bending 241 of the display 230 (which is operably connected to other electronics of device 200). For example, the identification module may identify the degree of bending 241 (e.g., defined by a bend angle) between a reference area 231 corresponding to one part of the display 230 and a bent area 233 corresponding to the other part of the display 230. For instance, the reference area 231 may be a partial area of the display 230 (e.g., which is perpendicular to an assumed line of sight of the user 201), which is (or is expected to be) recognized as a front view of the display 230 from the user 201. The reference area 231 may be identified as a generally planar area in a current state of display 230 through the use of flex sensors or force sensors (not shown) within the display 230. Alternatively, a line of sight of the user may be identified with a front facing camera lens on device 230 which tracks the user's face or eyes, and the reference area 231 may be defined in consideration of such face or eye tracking (discussed below).

According to an embodiment, the reference area 231 may be the area corresponding to the detected direction of the user 201 of the display 230, or may be an area (e.g., a flat area) of which the curvature is within a predetermined range (e.g., about 5 degrees). The bent area 233 may be designated as an area bent by at least a predetermined angle (e.g., a bend angle 241) to the reference area 231. Although an example of a bent area 233 is illustrated in FIG. 2 as a display portion with a specific curvature, in other embodiments, the bent area 233 may be a flat plate that is inclined at an angle to the reference area 231.

According to an embodiment, the identification module 173 may determine the reference area 231 and the bent area 233, based on the bent position (e.g., coordinates of the bent position) of the display 230. For example, when one or more bent positions are identified due to automatic deformation or user manipulation, the identification module may separate the display image into at least two image areas, based on the bent position 243. For example, the identification module 173 may identify the reference area 231 as a surface region at a first angle to a virtual plane (with the virtual plane defined with respect to the user 201), and the bent area 233 as a surface region at a second angle to the virtual plane, with the bent position 243 as a boundary. According to an embodiment, if there is no bent position 243 (e.g., a flat display), the identification module 173 may identify the display 230 as a single area without separating the reference area 231 and the bent area 233.

The bent position 243 may be identified using values that are variable in at least one area of the display 230 according to the degree of bending of the display 230 (e.g., a partial resistance value or an electric value, which is variable in at least one area of the display 230). For example, the identification module may identify the bent position 243 of the display 230 using a resistance value or an electric value (e.g. voltage or current), which is detected through flex sensors or force sensors disposed within device 200 (and which may be considered functionally connected to the display 230 since the bending condition sensed by the sensors may influence the output image through subsequent processing). A flex sensor, if used, may detect a resistance value that varies with the degree of bending 241 of the display, and a force sensor (if used) may convert a physical force into an electric signal.

According to an embodiment, if the display 230 includes a plurality of flex sensors (or force sensors) disposed at distributed positions of the display 230, the identification module may detect resistance values (or electric values) from the flex / force sensors at different positions. If a change in the resistance value (or the electric value) among the plurality of flex / force sensors is within a predetermined range (e.g., beyond a predetermined value), the identification module 173 may identify the position corresponding to the flex / force sensor of the changed resistance value (or electric value) in the predetermined range as the bent position 243.

The flex / force sensors may include sensors included in the display 230, or sensors that are positioned outside the display 230 and that are electrically connected with the display 230 or other circuitry within device 200 (e.g., flex / force sensors which can receive signals for detecting the degree of bending 241 of the display 230 from the display 230 through one or more components). Although the sensors that can detect the bent position 243 of the display 230 have been described as the flex or force sensors, other types of sensors may be available in other embodiments.

According to an embodiment, the identification module 173 may determine the reference area 231, based on status information for the electronic device (e.g., direction information or movement information of the electronic device). For example, the identification module 173 may obtain a front direction (e.g., a direction with x, y and z axes components, determined with respect to a direction originating from the center of the earth) of the display 230. The direction of the display 230 may be a direction at which a front surface thereof is facing, i.e., a direction of an outwardly facing normal to the front surface, where the front surface is the surface at which the image is output. The display 230's direction may be determined using an acceleration sensor (or a gyro-sensor) which may be a component of the electronic device 200. For example, if the front surface of the display 230 is facing in the opposite direction to the center of the earth (hereafter, "the sky direction"), the values of x, y, and z-axes obtained through the acceleration sensor, for example, may be (0, 0, +1). In addition, if the front surface of the display 230 is in the direction to the center of the earth (hereafter, "the earth direction"), the values of x, y, and z-axes obtained through the acceleration sensor, for example, may be (0, 0, -1).

In an example, a predetermined direction is set as the sky direction. When the front surface of the display 230 is determined through the acceleration sensor to face the predetermined (sky) direction, the identification module 173 may determine at least a partial area corresponding to the predetermined direction among the entire area of the display 230 as the reference area 231. For example, one partial area of the display 230 may be in the sky direction, and the remaining area may be bent at a predetermined angle to the partial area. In this case, the identification module may determine that the partial area is the reference area 231, and the other remaining area is the bent area 233.

According to an embodiment, if the display 230 is flat, and the front surface thereof faces the sky direction, the identification module 173 may determine the entire area of the display 230 as the reference area 231. Alternatively, the identification module may omit the determination of the reference area 231 and the bent area 233 with respect to the display 230. For example, the electronic device may not split the display 230 into one or more areas, and may output the provision image through the display 230 without adjustment.

According to an embodiment, the identification module may alter the reference area 231 according to the movement (e.g., a rotation) of the electronic device 200. For example, if the display 230 is deformed into a cylindrical shape, the identification module may configure a first area of the display 230, e.g., an area facing the sky direction, as the reference area 231, and a second (remaining) area of the display 230 not facing the sky direction as the bent area 233. In an example, the second area might be an area that has been rotated counter clockwise about 20 degrees from a normal to the first area. If the electronic device 200 (e.g., the front surface of the display 230) is rotated clockwise about 20 degrees, the identification module may determine the second area that is rotated counter clockwise about 20 degrees from the first area as the reference area 231, based on the rotation of the electronic device.

For example, the identification module may change the reference area 231 from the first area that was facing the sky direction previously to the second area, which is currently facing the sky direction due to the rotation. According to an embodiment, in order to obtain status information, the electronic device 200 may include, for example, an acceleration sensor, a gyro-sensor, a geomagnetic sensor, a gravity sensor, or the like. However, other types of sensors may be available for this purpose in other embodiments.

According to an embodiment, the identification module may determine the reference area 231, based on information on the user 201 of the electronic device 200. The user information, for example, may include sight-line (visual axis) information or face information of the user 201. For example, the identification module may obtain direction information on the sight-line (or face-direction information) of the user 201 through an image sensor within or otherwise functionally connected to electronic device 200. The identification module may determine at least a partial area of the display 230 corresponding to the direction of sight-line as the reference area 231. Devices for obtaining such user information are not limited to the image sensor.

According to an embodiment, the identification module may determine at least a partial area of the display 230, of which the curvature lies within a predetermined range of curvature, among one or more areas of the display 230, as the reference area 231. For example, the identification module may identify one or more curvatures corresponding to one or more of a plurality of partial areas constituting the display 230. For instance, the identification module may determine the area that has a relatively low curvature (e.g., a flat area) among one or more curvatures as the reference area 231. In addition, the identification module may determine the area that has a relatively high curvature (e.g., a curved area) as the bent area 233.

For example, the display 230 may include the first area having the first curvature, and the second area having the second curvature. If the first curvature is smaller than the second curvature, the identification module may determine the first area corresponding to the first curvature as the reference area 231. In addition, the identification module may determine the second area as the bent area 233.

According to an embodiment, the reference area 231 and the bent area 233 may be separated conceptually or physically. For example, as shown in FIG. 2, although the reference area 231 and the bent area 233 are configured physically as a single display 230, they may be separated conceptually (or in terms of software) in order to process the image provided through the display 230. Alternatively, although not shown in FIG. 2, the reference area 231 and the bent area 233 may be configured by individual displays that are physically separated. For example, the reference area 231 may be implemented by a first display, and the bent area 233 may be implemented by a second display that can exchange electric signals with the first display through one or more signal cables or components.

According to an embodiment, when the degree of bending 241 (e.g., the bend angle) of the display 230 is changed, the identification module may again identify the degree of bending 241. For example, when the degree of bending 241 is changed from a first degree of bending (e.g., about 20 degrees) to a second degree of bending (e.g., about 30 degrees) automatically or via manual bending by the user, the identification module may identify the degree of bending 241 for processing the provision image as the second degree of bending. The identification module may identify a change in the degree of bending 241, for example, through a change in resistance values detected by the flex sensor, or an electric signal provided from the force sensor.

According to an embodiment, the identification module may identify the degree of bending 241 between the bent area 233 and the reference area 231, periodically based on a predetermined period (e.g., about once a minute). The predetermined period, for example, may be configured by the user or a designer of the electronic device 200.

According to an embodiment, the identification module may identify the degree of bending 241 at the time the provision image is to be provided to the display 230. For example, when the display 230 is converted from an inactive state (e.g., a turn-off state, or a sleep mode) into an active state (e.g., a turn-on state), the electronic device 200 may obtain the image to be provided through the display 230. In this case, the identification module may identify the degree of bending 241 of the display 230 when provision image is to be provided through the display 230. Accordingly, in the case where no image is provided or a black image is provided through the display 230, the operation of identifying the degree of bending 241 (or the operation of changing the image to be provided through the display 230) will be limited, so power consumption can be reduced.

The provision module 177, for example, may provide the adjustment image that is generated by changing at least a part of the provision image through the display 230, based on the degree of bending 241 of the display 230. For example, if the degree of bending 241 is a first degree of bending (e.g., about 30 degrees), the provision module may enlarge or reduce at least a part of the provision image at a first ratio (e.g., about 0.7). This ratio may be understood as a size of an object in a part of the adjustment image relative to the size of that object in a corresponding part of the provision image. Similarly, if the degree of bending 241 is a second degree of bending (e.g., about 40 degrees), the provision module may enlarge or reduce at least a part of the provision image at a second ratio (e.g., about 0.8) to thereby generate the adjustment image. According to an embodiment, if it is identified that the degree of bending 241 has been changed from the first degree of bending to the second degree of bending by the identification module, the provision module may change at least a part of the provision image at a different ratio (i.e., different from the ratio of the first degree of bending) that is determined according to the second degree of bending to thereby output the adjustment image.

According to an embodiment, the provision module 177 may obtain the adjustment image, based on the viewing area 250 (e.g., the area of the viewing area 250, or the length of at least one side thereof) corresponding to the display 230, which varies depending on the degree of bending 241 of the display 230. For example, if the display 230 includes the first area (e.g., the reference area 231) and the second area (e.g., the bent area 233), the provision module may change the first part of the provision image, which corresponds to the first area, at one ratio, and the second part of the provision image, which corresponds to the second area, at a different ratio. For example, the first area may be changed based on the viewing area corresponding to the first area, and the second area may be changed based on the viewing area corresponding to the second area.

The viewing area 250, for example, may be the area of the display 230, which can be viewed by the user 201 among the entire area of the display 230 (e.g., the area actually recognized by the user 201 in the bent display 230), when the user 201 views at least a partial area (e.g., the reference area 231) of the display 230. For example, the viewing area 250 may be the area that is perpendicularly projected onto the virtual plane corresponding to a front view of the display 230 from the user 201. The area of the viewing area 250 may vary depending on the degree of bending 241 of the display 230. A higher degree of bending 241 of the display 230 yields a relatively smaller viewing area 250. For instance, when the degree of bending is close to about 180 degrees, or when the bent area 233 is fully folded onto the reference area 231, the viewing area 250 is about one half the area as compared to an unbent state.

According to an embodiment, "the display (e.g., the display 230) that is functionally connected with the electronic device (e.g., the electronic device 100)" may include the display 230 included in the electronic device 200 or a display in an external device (e.g., the electronic device 104 or server 106) which can communicate with the electronic device 100.

In the example above in FIG. 2, the display 230 is disposed in a front part of a housing of the electronic device 200, which may include other circuitry as seen in the block diagram of FIG. 1, so that the image processing module 170 generates the adjustment image as a function of the bending and /or the user's position. In other embodiments, the bending information / user position information may be transmitted to an external device such as the external device 104 or server 106 in FIG. 1 which provides the provision image. In this case, the external device, rather than the image processor 170 within device 200, may generate the adjustment image which is transmitted to device 200 instead of the provisional image. In other words, an equivalent provision module 177 may exist in the external device, and the display 230 may be considered functionally connected to the external device.

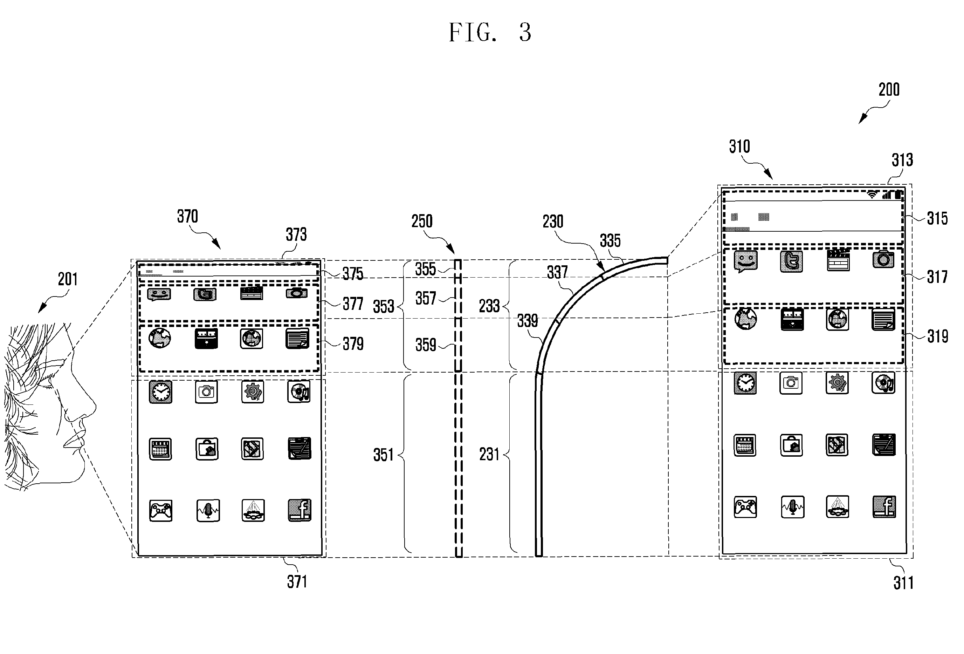

FIG. 3 illustrates an example in which an electronic device provides an image to a user 201 through a flexible display in a bent state. This example is presented to illustrate image distortion that may occur when a display bends, in the absence of any image correction. As shown in FIG. 3, an electronic device 200 may display a provision image 310 through the bent display 230 without adjusting the same. In this case, at least a portion of the provision image 310, which is displayed through the bent area 233 of the display 230, may be viewed distorted by the user 201 (e.g., at least a portion thereof is reduced, enlarged, or deleted relative to the way it would be seen if the display 230 were not bent).

For example, since the user 201 recognizes the provision image 310 through the viewing area 250 which is smaller than the actual area of the display 230 (i.e., one side thereof is shorter than the corresponding side of the display 230) due to the bending of the display 230, at least a portion of the provision image 310 may be viewed as a reduced image 370. Hereinafter, for convenience of explanation, the image of which at least a portion is viewed by the user 201 as if it is actually distorted, according to the degree of bending of the display 230, is defined as a "distortion image". For example, the bent display 230 may include the reference area 231 corresponding to a front view from the user 201, and the bent area 233 that extends in a curve at a predetermined angle (e.g., the degree of bending 241) from the reference area 231. Accordingly, the first provision part 311 of the provision image 310 may be displayed through the reference area 231, and the second provision part 313 of the provision image 310 may be displayed through the bent area 233.

The distortion image 370 may include a normal part 371 corresponding to the first provision part 311, and a distortion part 373 corresponding to the second provision part 313. Since the first provision part 311 is provided through the area where the curvature of the display 230 is relatively smaller (e.g., a flat area), the normal part 371 may be recognized without a distortion by the user. On the contrary, since the second provision part 313 is provided through the viewing area 353 which is smaller than the bent area 233 as seen by the user 301, at least a portion thereof may be recognized as being distorted in the distortion part 373.

For example, if the bent area 233 is a curved area, a plurality of subparts (e.g., the first subpart 315, the second subpart 317, and the third subpart 319) included in the first provision part 311 may be provided through a plurality of subareas (e.g., the first subarea 335, the second subarea 337, and the third subarea 339), respectively. In this case, the plurality of subparts 315, 317, and 319 included in the second provision part 313 may be viewed as they are enlarged or reduced at different ratios as seen by the user 201 according to the size (or the length) of the corresponding viewing area (e.g., the first viewing area 355 corresponding to the first subpart 315), wherein the viewing areas (e.g., the first viewing area 355, the second viewing area 357, and the third viewing area 359) correspond to the plurality of subareas 335, 337, and 339, respectively.

For example, the first subpart 315 is recognized by the user 201 through the first viewing area 355 which is smaller than the first subarea 335, so the first subpart 315 may be viewed as it is reduced as much as the size of the first viewing area 355. For example, if the ratio of the size of the first subarea 335 to the size of the first viewing area 355 is 1:0.5, the first subpart 315 may be recognized by the user as the first sub-distortion part 375 of the distortion image 370, which is reduced at a ratio of 0.5.

In addition, the second subpart 317 is recognized by the user through the second viewing area 357 which is smaller than the second subpart 317, so the second subpart 317 may be viewed as it is reduced as much as the size of the second viewing area 357. For example, if the ratio of the size of the second subarea 337 to the size of the second viewing area 357 is 1:0.75, the second subpart 317 may be recognized as the second sub-distortion part 377 of the distortion image 370, which is reduced at a ratio of 0.75, as seen by the user 210. Furthermore, the third subpart 319 is recognized through the third viewing area 359 that is smaller than the third subpart 319 as seen by the user, so the third subpart 319 may be viewed as it is reduced as much as the size of the third viewing area 359. For example, if the ratio of the size of the third subarea 339 to the size of the third viewing area 359 is 1:0.9, the third subpart 319 may be recognized by the user as the third sub-distortion part 379 of the distortion image 370, which is perceived reduced at a ratio of 0.9.

On the contrary, the first provision part 311 is recognized by the user through the reference viewing area 351 corresponding to the first provision part 311 which has the identical or similar size to the reference area 231. As a result, the first provision part 311 may be viewed with little or no distortion (or, in the identical or similar size to the first provision part 311) compared with the second provision part 313, based on the size of the reference viewing area 351. For example, when the first provision part 311 is provided through the flat reference area 231, the size of the reference area 231 (e.g., the one side length is about 60 mm) may be the same as the size of the reference viewing area 351 (e.g., about 60 mm) corresponding to the reference area 231. Accordingly, the first provision part 311 may be recognized by the user as the normal part 371 of the distortion image 370, which is not distorted (e.g., the same as the first provision part 311).

According to an embodiment, although not shown in FIG. 3, in the case where the bent area 233 is not a curved area but a flat area, the second provision part 313 may be viewed by the user 201 as it is enlarged or reduced at a ratio of the entire provision image to the second provision part 313 (e.g., a ratio of 0.5). For example, as shown in FIG. 3, if the bent area 233 is curved, a plurality of parts constituting the bent area 233 may be different in their curvatures, so the distortion image 370 corresponding to each of the plurality of parts may be viewed as being reduced or enlarged at different ratios. However, if the bent area 233 is a flat area, a plurality of parts constituting the bent area 233 may have the same degree of bending with respect to the reference area 231, so the distortion part 373 of the entire bent area 233 may be viewed as being reduced or enlarged at the same ratio. (In the example of FIG. 3, the distortion parts are viewed reduced.)

Although not shown in the drawings, according to an embodiment, in order to prevent the second provision part 313 provided through the bent area 233 of the display 230 from being viewed distorted by the user 201, the electronic device 200 may provide the provision image 310 through only the reference area 231 which is a flat area in the display 230. For example, in the case of the flat display 230, the electronic device 200 may provide the image through the entire area of the display. In addition, when the display 230 is deformed into a bent one, the electronic device may reduce the size of the provision image 310 (e.g., reduce the entire image at the same ratio) so that all the information in the provision image 310 is still visible, albeit at a reduced size. Alternatively or additionally, the location of the provision part 310 may be changed (displaced) to thereby provide the provision image 310 through only the flat area (e.g., the flat area of the display 230). For instance, in the latter case, if the provision image 310 has a lower portion with no content, that portion may be scrolled off the flat area while another portion previously displayed in the curved area may be scrolled into the flat area.

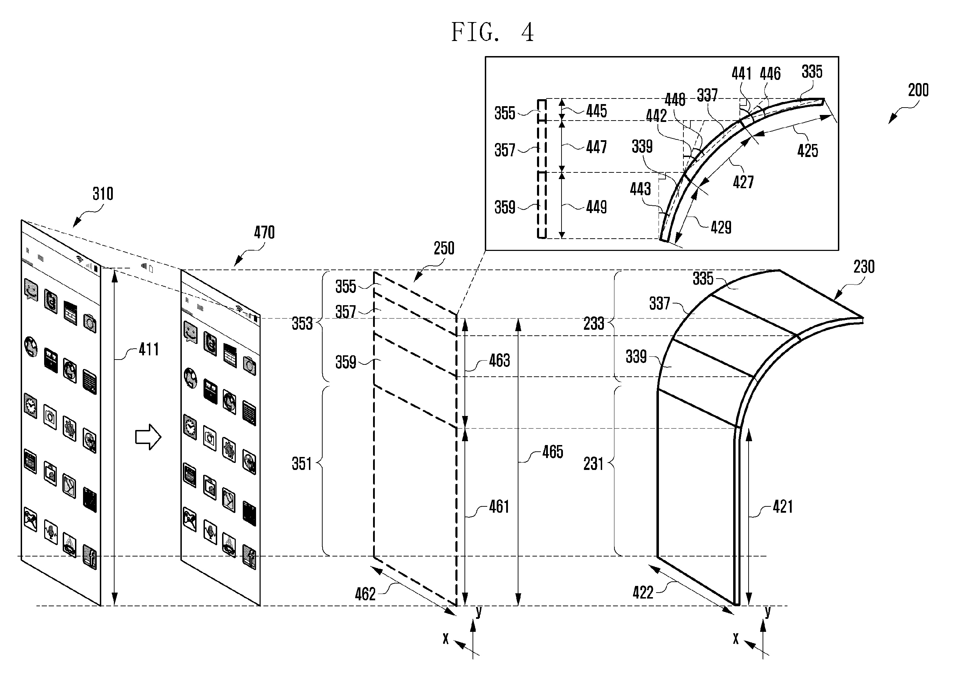

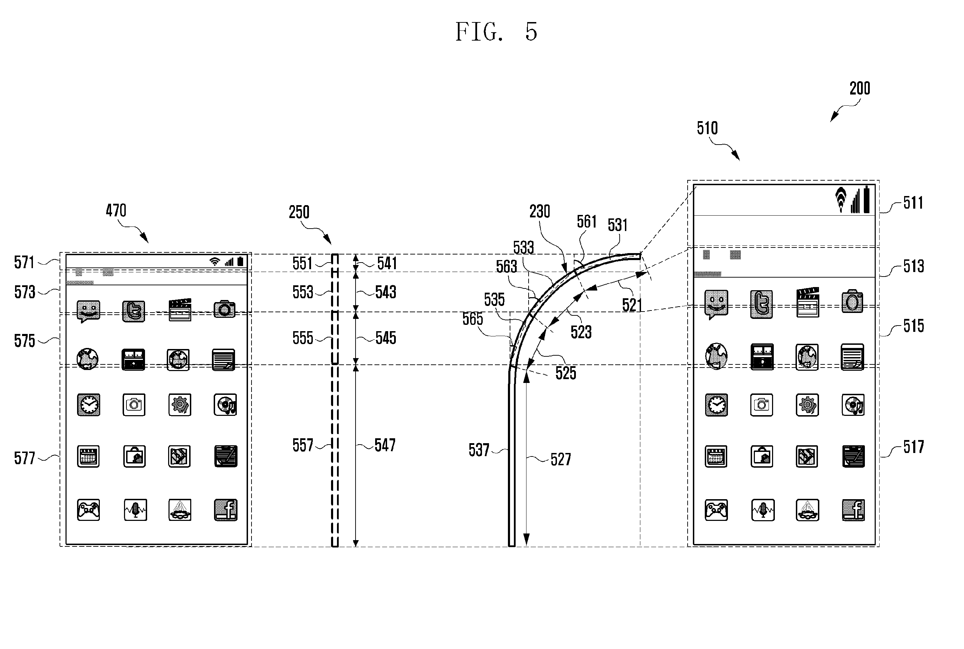

FIGs. 4 and 5 illustrate examples for providing an adjustment image, which is obtained by changing at least a part of the provision image 310, through the display 230, according to various embodiments. As explained above, according to the example of FIG. 3, the provision image 310 may be viewed as if at least a part thereof is distorted as the distortion image 370 by the user 301. On the contrary, according to the examples of FIGS. 4 and 5, the provision image 310 may be improved by correcting the image distortion, and then a recognition image 470 resulting from the improvement may be recognized by the user 201. For example, the recognition image 470 may comprise all the content of the provision image 310 that the user 201 wishes to view through the bent display 230.

Accordingly, to allow all content of the provision image 310 to be viewed as the recognition image 470 by the user, the provision module 177 may determine an adjustment image 510 that is actually to be output through the display 230. For example, the adjustment image 510 may be the image that is to be output on the display 230 by changing at least a part of the provision image 310, so that the provision image 310 displayed through the bent display 230 can be recognized as the recognition image 470. The electronic device 200 may provide the adjustment image 510 through the display 230. Hereinafter, a description of the elements of FIGs. 4 and 5, which are identical or similar to those of FIG. 3, will be omitted for brevity.

Referring to FIG. 4, the provision module 177 may determine a projected recognition image 470, based on the user's viewing area 250 (e.g., the area of the viewing area 250, or the length of one side thereof) of the display 230. The projected recognition image 470 will of course appear smaller to the user than the provision image 310 otherwise viewable if the display 230 were in an unbent state. The recognition image 470, for example, may be an image that is obtained by enlarging (scaling up) or reducing (scaling down) respective portions of the entire provision image 310 at computed ratios so that all the original content of the provision image 310 is visible by user without distortion in the viewing area 250. Depending on the degree of curvature, in order for the user to perceive all the original content without distortion, an overall reduction ratio of the provisional image 310 may differ. For instance, the projected recognition image may be reduced in size by e.g. 0.8 times the provisional image for a first degree of curvature, or e.g. 0.5 times for a second degree of curvature more severe than the first degree of curvature.

For example, the display 230 may be bent at least in part along a y-z plane, where the y-axis is a reference axis parallel to the long sides of a generally rectangular display 230 as in FIGS. 4 and 5, the x-axis is in the direction of the shorter sides of the rectangle, and the z-axis is of course orthogonal to each of the y and x axes. In this case, the length 462 of the viewing area 250 along the x-axis is the same as the length 422 of the display 230 along the x-axis, whereas the length 465 of the viewing area 250 on the y-axis is different from the entire physical length of the display 230 on the y-axis. According to this scenario, the recognition image 470 may be determined based on the y-axis-length 465 of the viewing area 250. In the case where the ratio of the length 411 of the provision image 310 (e.g., the length of the area where the provision image 310 is displayed on the display 230) to the length 465 of the viewing area 250 is 1:0.8, the recognition image 470 may be determined as the image that is projected by reducing the length of the provision image 310 at a ratio of 0.8 (e.g., by reducing the provision image to an identical or similar size to the length 465 of the viewing area 250).

As just described, according to an embodiment, if the area (or the length) of the provision image 310 (e.g., the area where the provision image 310 is displayed on the distortion image 230) is greater than the area (or the length) of the viewing area 250, the recognition image 470 may be obtained by reducing the provision image 310, based on the area length of the viewing area 250. In addition, although not shown, if the area / length of the provision image 310 is equal to or less than the area / length of the viewing area 250, the recognition image 470 may have the identical or similar area / length to that of the provision image 310. This condition may occur if the provision image 310 occupies only a portion of the allowable display area of display 230.

The area / length of the viewing area 250, for example, may be determined by summing the area / length of the bent viewing area 353 corresponding to the bent area 233 of the display 230 and the area / length of the reference viewing area 351 corresponding to the reference area 231 of the display 230. Here, the bent viewing area 353 is a viewing area projected onto the virtual plane of the viewing area 250. In addition, the area / length of the bent viewing area 353, for example, may be determined by summing the areas (or the lengths) of a plurality of viewing areas (e.g., the first viewing area 355, the second viewing area 357, and the third viewing area 359) corresponding to the plurality of subareas (e.g., the first sub-area 335, the second sub-area 337, and the third subarea 339) included in the bent area 233, respectively.

For example, the length 465 of the viewing area 250 may be given as a sum of the length 463 of the bent viewing area 353 and the length 461 of the reference viewing area 351. In addition, the y-axis-length 463 of the bent viewing area 353 may be given as a sum of the y-axis-length 445 of the first viewing area 355, the y-axis-length 447 of the second viewing area 357, and the y-axis-length 449 of the third viewing area 359. The respective y-axis-lengths 445, 447, and 449 of the first viewing area 355, the second viewing area 357, and the third viewing area 359 may be determined, for example, using a trigonometric function as Equation 1 as follows:

[Length of viewing area] = [Sublength] * COS([angle *a*]) (eqn. (1).

For example, in Equation 1, "length of viewing area" may be the first viewing length 445 corresponding to the first viewing area 355, the second viewing length 447 corresponding to the second viewing area 357, or the third viewing length 449 corresponding to the third viewing area 359. In addition, "sublength" may be considered a linear length between end points of a curved section, and may be the first sublength 425 corresponding to the first subarea 335, the second sublength 427 corresponding to the second subarea 337, or the third sublength 429 corresponding to the third subarea 339. In addition, "angle *a*" may be the first angle 441 between the first viewing area 355 and the first subarea 335, the second angle 442 between the second viewing area 357 and the second subarea 337, or the third angle 443 between the third viewing area 359 and the third subarea 339. For example, in Equation 1, the first viewing length 445 may be "first sublength 425 * COS (first angle 441)." Likewise, the second viewing length 447 may be "second sublength 427 * COS (second angle 442)." In addition, the third viewing length 449 may be "third sublength 429 * COS (third angle 443)."

In this case, the length 463 of the bent viewing area 353 may be first sublength 425 * COS (first angle 441)} + {second sublength 427 * COS (second angle 442)} + {third sublength 429 * COS (third angle 443)}. If the reference area 231 of the display 230 is flat, the length 461 of the reference viewing area 351 corresponding to the reference area 231 may be identical or similar to the length 421 of the reference area 231. In this case, the length 465 of the viewing area 230 may be "{first sublength 425 * COS (first angle 441)} + {second sub-length 427 * COS (second angle 442)} + {third sublength 429 * COS (third angle 443)} + length 461."

To this end, the electronic device 200 may identify the first to the third sublengths 425, 427, and 429, and the first to the third angles 441, 442, and 443. According to an embodiment, the first to the third sublengths 425, 427, and 429 may be identified, for example, using the number of pixels corresponding to the first to the third subareas 335, 337, and 339. According to an embodiment, the first to the third angles 441, 442, and 443 may be determined, for example, using the respective degrees of bending corresponding to the plurality of subareas 335, 337, and 339 of the display 230.

The electronic device 200, for example, may identify the respective degrees of bending corresponding to the plurality of subareas 335, 337, and 339 using a flex sensor (or the force sensor) within the display 230 or device 200. For example, the first angle 443 may be considered a first degree of bending between the reference area 231 and the third subarea 339. The second angle 442 may be a sum of the second degree of bending 448 between the third subarea 339 and the second subarea 337, and the first angle 443. In addition, the third angle 441 may be a sum of the third degree of bending 446 between the second subarea 337 and the first subarea 335, and the second angle 442.

According to various embodiments of the present disclosure, the plurality of subareas 335, 337, and 339 included in the bent area 233 may have various sizes or shapes, which are configured automatically, or by a designer or the user of the electronic device 200. For example, in the case where the display 230 is bent to be slanted with respect to at least one axis (e.g., the x-axis, or the y-axis) of the display 230, at least one of the plurality of subareas 335, 337, and 339 included in the bent area 233 may be shaped into a polygon (e.g., a parallelogram or a trapezium). In this case, the recognition image 470 may be determined to correspond to the shape of the viewing area 250 based on the shape of the display 230.

In addition, although the bent area 233 is separated into the first to the third subareas 335, 337, and 339 for convenience of explanation in the present embodiment, the present invention is not limited thereto. According to an embodiment, the bent area 233 may be divided into more or fewer than three subareas. According to an embodiment, the more subareas the bent area 233 is divided into, the more precisely (or accurately) the length 465 of the viewing area 250 can be determined.

Referring to FIG. 5, the provision module 177 may output the adjustment image 510 in which at least a part of the recognition image 470 is changed, to allow the user to recognize the image through the bent display 230 as the recognition image 470. For example, the electronic device 200 may map one or more recognition parts (e.g., the first recognition part 571) of the recognition image 470 with a corresponding area (e.g., the first subarea 531) of the display 230. The electronic device 200 may enlarge or reduce at least a part of the provisional image 310 in order for a corresponding part of the recognition image 470 to appear undistorted. Thus it can be said that the recognition image 470 may be altered based on at least a part (e.g., the first subarea 531) of the display 230, which is mapped with at least a part (e.g., the first recognition part 571) of the recognition image 470. In this case, the adjustment image 510 displayed on the display 230 may be recognized actually as the recognition image 470 (which is improved compared to the distortion image 370 of FIG. 3) by the user 201. As illustrated, visual elements of the adjustment image 510 in the bent areas may be stretched, i.e., scaled up, in the y-axis direction in order for the objects to appear undistorted in the recognition image 470, when bending of display 230 occurs in the y-z plane. Concurrently, visual elements in the flat areas of display 230 may be reduced, i.e., scaled down, in the y-axis direction, to fit proportionally within the smaller recognition image 470..

For example, if the display 230 includes the first subarea 531, the second subarea 533, the third subarea 535, and the fourth subarea 537, the electronic device 200 may map the first recognition part 571 of the recognition image 470 with the first subarea 531, the second recognition part 573 of the recognition image 470 with the second subarea 533, the third recognition part 575 of the recognition image 470 with the third subarea 535, and the fourth recognition part 577 of the recognition image 470 with the fourth subarea 537, respectively.

In this case, the electronic device 200 may alter the first recognition part 571, based on the area of the first subarea 531, and may alter the second recognition part 573, based on the area of the second subarea 533. In addition, the electronic device may alter the third recognition part 575, based on the area of the third subarea 535, and may alter the fourth recognition part 577, based on the area of the fourth subarea 537. According to this, the electronic device may provide the first adjustment part 511 corresponding to the first recognition part 571, which has been altered, through the first subarea 531, and may provide the second adjustment part 513 corresponding to the second recognition part 573, which has been altered, through the second subarea 533. In addition, the electronic device may provide the third adjustment part 515 corresponding to the third recognition part 575, which has been altered, through the third subarea 535, and may provide the fourth adjustment part 517 corresponding to the fourth recognition part 577, which has been altered, through the fourth subarea 537.

According to an embodiment, the electronic device may determine at least parts of the recognition image 470 (e.g., the first recognition part 571, the second recognition part 573, the third recognition part 575, and the recognition part 577), which are mapped with the first to fourth subareas 531, 533, 535, and 537, respectively, based on the viewing areas 551, 553, 555, and 557 (e.g., the areas or lengths of the viewing areas) corresponding to the first to the fourth subareas 531, 533, 535, and 537 in the display 230, respectively.

For example, the first recognition part 571 mapped with the first subarea 531 may correspond to the area that extends downwards from the upper end of the recognition image 470 by the length 541 of the first viewing area 551 for the first subarea 531 along the y-axis. The second recognition part 573 mapped with the second subarea 533 may correspond to the area that extends downwards from the lower end of the first recognition part 571 by the length 543 of the second viewing area 553 for the second subarea 533 along the y-axis. In addition, the third recognition part 575 mapped with the third subarea 535 may correspond to the area that extends downwards from the lower end of the second recognition part 573 by the length 545 of the third viewing area 555 for the third subarea 535 along the y-axis. Likewise, the fourth recognition part 577 mapped with the fourth subarea 537 may correspond to the area that extends downwards from the lower end of the third recognition part 575 by the length 547 of the fourth viewing area 557 for the fourth subarea 537 along the y-axis.

The lengths 541, 543, and 545 of the first to third viewing areas 551, 553, and 555 corresponding to the first to the third subareas 531, 533, and 535, respectively, which are included in the bent area (e.g., the bent area 233) in the display 230, may be determined in the identical or similar manner to the determining of the first to the third viewing lengths 445, 447, and 449 of FIG. 4. In addition, if the fourth subarea 537 is a flat one, the length 547 of the fourth viewing area 557 corresponding to the fourth subarea 537 of the reference area (e.g., the reference area 231) in the display 230 may be identical or similar to the length 527 of the fourth subarea 537. If the fourth subarea 537 is a curved area, the length 547 of the fourth viewing area 557 may be determined in the identical or similar manner to the determining of the lengths 541, 543, and 545 of the first to the third viewing areas 551, 553, and 555, based on the degree of bending of the fourth subarea 537.

According to an embodiment, the electronic device may change (e.g., scale up visual elements or scale down visual elements of) the first to the fourth recognition parts 571, 573, 575, and 577 of the recognition image 470 as the first to the fourth adjustment parts 511, 513, 515, and 517 of the corresponding adjustment image 510, based on the areas (or the lengths) of the first to the fourth subareas 531, 533, 535, and 537 in the display 230. For example, the ratio of the y-axis-length 541 of the first recognition part 571 to the y-axis-length 521 of the first subarea 531 of the display 230, which is mapped with the first recognition part 571, may be 1:3. In this case, the first recognition part 571 may be enlarged three times along the y-axis as the first adjustment part 511 of the adjustment image 510. In addition, the ratio of the y-axis-length 543 of the second recognition part 573 to the y-axis-length 523 of the second subarea 533 of the display 230, which is mapped with the second recognition part 573, maybe 1:1.5. In this case, the second recognition part 573 may be enlarged one and a half times along the y-axis as the second adjustment part 513 of the adjustment image 510.

In addition, the ratio of the y-axis-length 545 of the third recognition part 575 to the y-axis-length 525 of the third subarea 535 of the display 230, which is mapped with the third recognition part 575, may be 1:1.2. In this case, the third recognition part 575 may be enlarged 1.2 times along the y-axis as the third adjustment part 515 of the adjustment image 510. In addition, in the case where the fourth subarea 537 of the display 230 is flat, the ratio of the y-axis-length 547 of the fourth recognition part 577 to the y-axis-length 527 of the fourth subarea 537 of the display 230, which is mapped with the fourth recognition part 577, may be 1:1. In this case, the fourth recognition part 577 may remain as the fourth adjustment part 517 of the adjustment image 510.

According to various embodiments of the present disclosure, the respective ratios of the lengths 551, 553, and 555 of the first to the third recognition parts 571, 573, and 575 included in the recognition image 470 to the lengths 521, 523, and 525 of the first to the third subareas 531, 533, and 535 in the display 230, for example, may vary depending on the degrees of bending 561, 563, and 565 of the first to the third subareas 531, 533, and 535, respectively.

For example, among the first angle 561, i.e., the degree of bending of the first subarea 531, the second angle 563, i.e., the degree of bending of the second subarea 533, and the third angle 565, i.e., the degree of bending of the third subarea 535, the first angle 561 may be the greatest, and the third angle may be the smallest. In this case, among the first ratio of the length 541 of the first recognition part 571 to the length 521 of the first subarea 531, the second ratio of the length 543 of the second recognition part 573 to the length 523 of the second subarea 533, or the third ratio of the length 545 of the third recognition part 575 to the length 525 of the third subarea 535, the first ratio may be the greatest, and the third ratio may be the smallest. Accordingly, the electronic device 200 may enlarge visual elements of the first recognition part 571 at the first ratio, which is the highest, and may enlarge visual elements of the third recognition part 575 at the third ratio, which is the smallest.

As described above, in various embodiments of the present disclosure, the provision image 310 provided through the display 230 may be recognized distorted as the distortion image 370 by the user 201. In order to allow the user to recognize the provision image 310 as the recognition image 470, in which the distortion is corrected, rather than the distortion image 370, the provision module 177 of electronic device 200 may change the provision image 310 into the adjustment image 510. The electronic device 200 may output the adjustment image 510 through the bent display 230. Accordingly, the user may recognize the provision image 310 as the recognition image 470, where all contents of the provision image 310 are recognized undistorted.

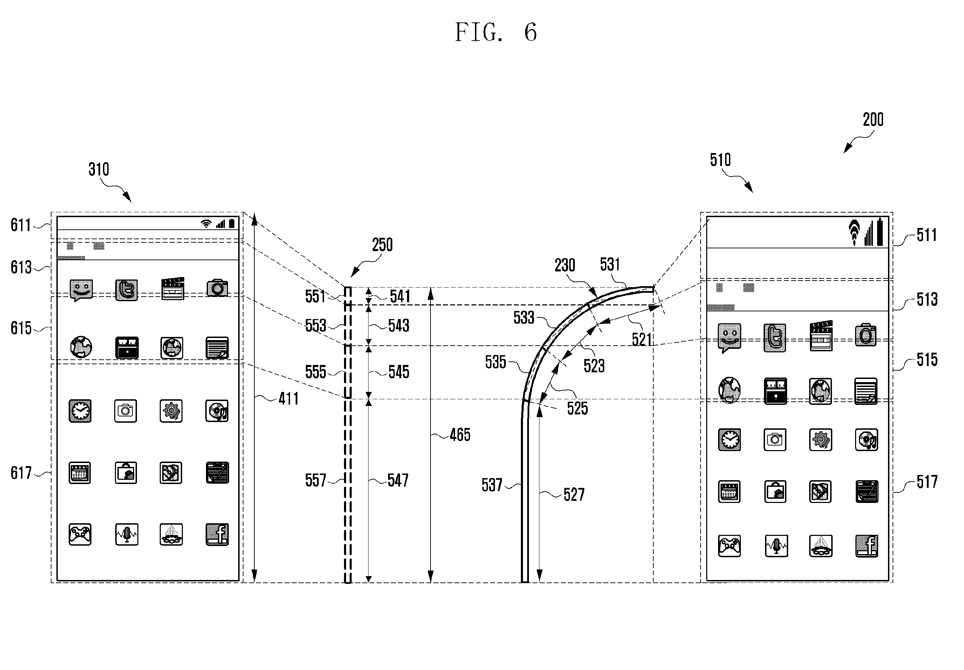

FIG. 6 illustrates a relationship between a provision image, a display bending state, a user's viewing area, and an adjustment image, according to various embodiments of the present disclosure. In particular, FIG. 6 shows the relationship between the provision image 310 as seen in FIGS. 3 and 4, and the resulting adjustment image 510 as seen in FIG. 5, which results from the bending state of display 230 illustrated in each of FIGS. 3-6.

The electronic device 200 may identify the first to the fourth mapping parts 611, 613, 615, and 617 of the provision image 310, which correspond to the first to the fourth subareas 531, 533, 535, and 537 in the display 230. In this case, the electronic device may change the first to the fourth mapping parts 611, 613, 615, and 617 into the first to the fourth adjustment parts 511, 513, 515, and 517 of the adjustment image 510, based on the areas (or lengths) of the first to the fourth subareas 531, 533, 535, and 537, and the first to the fourth viewing areas 551, 553, 555, and 557.

For example, the first ratio of the length 411 of the provision image 310 to the length 465 of the viewing area 250 may be 1:0.8. In addition, the first mapping part 611 of the provision image 310 may be mapped with the first subarea 531 of the display 230. In this case, the first mapping part 611 may be reduced about 0.8 times, based on the first ratio. At the same time, the first mapping part 611 may be enlarged about three times, based on the second ratio, i.e., 1:3, of the length 541 of the first viewing area 551 to the length 521 of the first subarea 531. Therefore, the first adjustment part 511 may be given by enlarging the first mapping part 611 "0.8 * 3" times.

In addition, the second mapping part 613 of the provision image 310 may be mapped with the second subarea 533 of the display 230. In this case, the second mapping part 613 may be reduced about 0.8 times, based on the first ratio. At the same time, the second mapping part 613 may be enlarged about one and a half times, based on the third ratio, i.e., 1:1.5, of the length 543 of the second viewing area 553 to the length 523 of the second subarea 533. Therefore, the second adjustment part 513 may be given by enlarging the second mapping part 613 "0.8 * 1.5" times. Further, the third mapping part 615 of the provision image 310 may be mapped with the third subarea 535 of the display 230. In this case, the third mapping part 615 may be reduced about 0.8 times, based on the first ratio. Concurrently, the third mapping part 615 may be enlarged about 1.2 times, based on the fourth ratio, i.e., 1:1.2, of the length 545 of the third viewing area 555 to the length 525 of the third subarea 535. Therefore, the third adjustment part 515 may be given by enlarging the third mapping part 615 "0.8 * 1.2" times. Moreover, if the fourth subarea 537 of the display 230 is flat, the fourth adjustment part 517 may be given by reducing the fourth mapping part 617 about 0.8 times, based on the first ratio.

According to an embodiment, the electronic device 200 may determine the mapping parts 611, 613, 615, and 617 of the provision image 310, which are mapped with the first to the fourth subareas 531, 533, 535, and 537 of the display 230, based on the ratio of the provision image 310 to the viewing area 250. For example, the ratio of the length 411 of the provision image 310 to the length 465 of the viewing area 250 may be 1:0.8. In this case, the first mapping part 611 may correspond to the area that extends downwards from the upper end of the provision image 310 by 1/0.8 times the length 541 of the first viewing area 551. The second mapping part 613 may correspond to the area that extends downwards from the lower end of the first mapping part 611 by 1/0.8 times the length 543 of the second viewing area 553. The third mapping part 615 may correspond to the area that extends downwards from the lower end of the second mapping part 613 by 1/0.8 times the length 545 of the third viewing area 555.

In addition, the fourth mapping part 617 may correspond to the area that extends downwards from the lower end of the third mapping part 615 by 1/0.8 times the length 547 of the fourth viewing area 557. According to an embodiment, the areas or the lengths of the viewing areas 551, 553, 555, and 557 may be determined in the identical or similar manner to the determining of the viewing areas 551, 553, 555, and 557 in FIG. 4.

According to various embodiments, the electronic device (e.g., the electronic device 100 or 200) for processing images may include: a display (e.g., the display 230) that outputs at least one image; and an image processing module (e.g., the image processing module 170) that is functionally connected with the display, wherein the image processing module identifies a degree of bending (e.g., the third angle 565) of the display, provides an adjustment image (e.g., the adjustment image 510) given by changing at least a part (e.g., the third mapping part 615) of a provision image (e.g., the provision image 310), which is to be provided through the display, through the display, based on the degree of bending, if the degree of bending is the first degree of bending (e.g., about 30 degrees), enlarges or reduces the at least a part at the first ratio (e.g., enlarges the same about 1.2 times), and if the degree of bending is the second degree of bending (e.g., about 45 degrees), enlarges or reduces the at least a part at the second ratio (e.g., enlarges the same about 1.5 times).

According to various embodiments, the image processing module may identify the degree of bending in response to obtainment of the provision image. For example, when the display is turned on, the provision image may be obtained. In this case, the image processing module may identify the degree of bending in response to the obtainment of the provision image.

According to various embodiments, the image processing module may identify the degree of bending according to a predetermined period (e.g., once a minute).

According to various embodiments, the degree of bending may be automatically determined based on applications executed in the electronic device, or a surrounding environment thereof. For example, when an e-mail application is executed in the electronic device, the image processing module may transform the display at a predetermined angle (e.g., 90 degrees). In addition, if the intensity of illumination is low (e.g., about 10 lux) around the electronic device, the image processing module may transform the display into a cylindrical shape.

According to various embodiments, when the degree of bending (e.g., about 30 degrees) is changed into another degree of bending (e.g., about 45 degrees), the image processing module may identify the changed degree of bending.

According to various embodiments, the image processing module may change (e.g., enlarge) at least a part of the provision image at a different ratio (e.g., about 1.5 times) according to another degree of bending.

According to various embodiments, the display may include the first area (e.g., the fourth subarea 537), and the second area (e.g., the third subarea 535) that is bent at least in part with respect to the first area, and the image processing module may change the first part (e.g., the fourth mapping part 617) of the provision image, which corresponds to the first area, and the second part (e.g., the third mapping part 615) of the provision image, which corresponds to the second area, to be different from each other. For example, the image processing module may reduce the first part at the first ratio (e.g., about 0.8 times), and may reduce the second part at the second ratio (e.g., about 0.9 times).

According to various embodiments, the image processing module may change the first part, based on a viewing area (e.g., the viewing area 557) corresponding to the first area, and may change the second part, based on a viewing area (e.g., the viewing area 555) corresponding to the second area.

According to various embodiments, the image processing module may obtain a viewing area (e.g., the viewing area 250) corresponding to the display, based on the degree of bending.

According to various embodiments, the image processing module may determine a viewing area (e.g., the viewing area 250) corresponding to the display, based on a user (e.g., the user 201 or 301) of the electronic device.

According to various embodiments, the image processing module may determine the viewing area, based on at least one piece of status information on the electronic device (e.g., a curvature or a direction of at least a partial area of the display), or user information (e.g., information on the line of sight of the user). For example, the image processing module may determine the viewing area, based on a partial area (e.g., the reference area 231) of the display, which corresponds to the opposite direction of the center of the earth. In addition, the image processing module may determine the viewing area, based on a partial area (e.g., the reference area 231) of the display, which corresponds to the direction of the sight-line of the user.

According to various embodiments, the image processing module may determine a recognition image (e.g., the recognition image 470) for creating the adjustment image by enlarging or reducing the provision image at a predetermined ratio, based on the viewing area.

According to various embodiments, the image processing module may enlarge or reduce the provision image, based on the ratio (e.g., 1:0.8) of at least a partial area of the display (e.g., the area where the provision image is to be output in the display), which corresponds to the provision image, to the viewing area, to determine the recognition image.

According to various embodiments, the image processing module may determine a recognition image for creating the adjustment image by enlarging or reducing the provision image, based on at least one of a size or a length of the viewing area.

According to various embodiments, the display may include the first area (e.g., the reference area 231), and the second area (e.g., the bent area 233) that is bent at a predetermined angle with respect to the first area, and the second area is flat or curved.

According to various embodiments, the second area (e.g., the bent area 233) may include the first subarea (e.g., the first subarea 531) and the second subarea (e.g., the second subarea 533), and the image processing module may change the first part (e.g., the first mapping part 611) corresponding to the first subarea among the provision image, based on the first degree of bending (e.g., the first angle 561) of the first subarea, and may change the second part (e.g., the second mapping part 613) corresponding to the second subarea among the provision image, based on the second degree of bending (e.g., the second angle 563) of the second subarea.

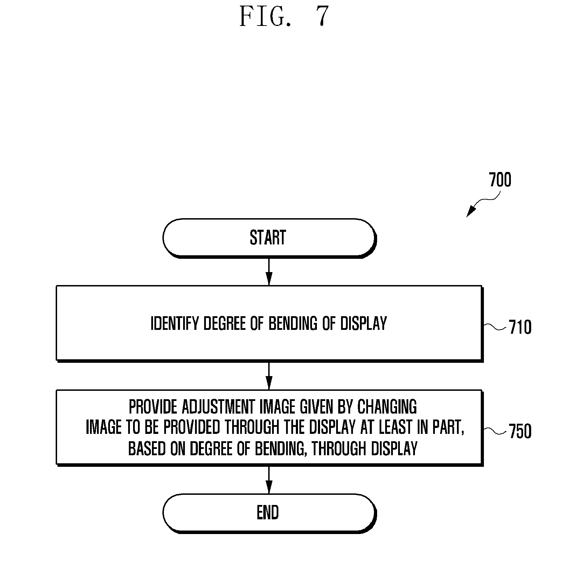

FIG. 7 is a flowchart illustrating a method 700 of processing an image (e.g., the provision image 310) by an electronic device (e.g., the electronic device 100 or 200), according to various embodiments. In operation 710, the identification module 173 may identify the degree of bending of the display 230. For example, if a single area is bent at a specific angle in the display, the electronic device may identify the degree of bending of the single area. If a plurality of areas are bent at different angles in the display, the electronic device may identify a plurality of degrees of bending for the respective plurality of areas.

In operation 750, the provision module 177 may provide the adjustment image (e.g., 510) created by changing the provision image (e.g., 310) at least in part through the display, based on the degree of bending of the display. For example, the electronic device may determine the recognition image (e.g., 470 through which the provision image is required or expected to be recognized by the user, based on the viewing area of the user for the display. In this case, if the degree of bending of the display is defined as a bending angle, the electronic device may reduce at least a part of the recognition image at a ratio corresponding to or derived from the bending angle, to create the adjustment image, and may provide the same through the display. The ratio may be a size relationship between an area or length of the recognition image relative to an area or length of the provision image.

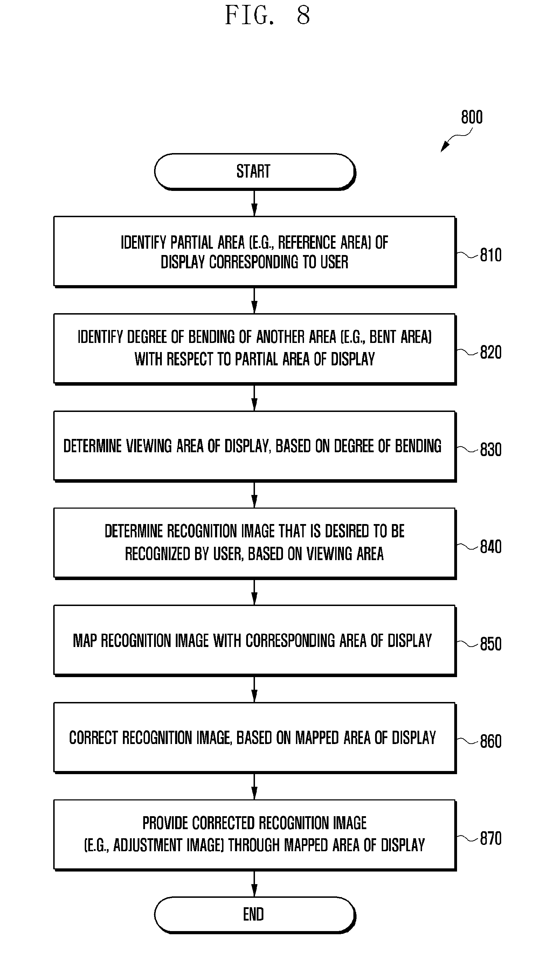

FIG. 8 is a flowchart illustrating a method 800 of processing a provision image by an electronic device (100 or 200), according to various embodiment of the present invention. In operation 810, the identification module 173 may identify a partial area (e.g., the reference area 231) of the display 230, which is viewed by the user, e.g. an area expected to be viewed as a front view by the user. The partial area may be determined based on direction information, movement information, or a curvature of the display.

In operation 820, the identification module 173 may identify the degree of bending of another area (e.g., the bent area 233) with respect to the partial area of the display.

In operation 830, the provision module 177 may determine the viewing area (e.g., 250) of the display, based on the degree of bending of the display 230. The viewing area, for example, may correspond to the area where the display is perpendicularly projected, and which is parallel to the partial area.

In operation 840, the electronic device may determine the image (e.g., the recognition image 470) that is desired to be recognized by the user, based on the viewing area. According to an embodiment, the electronic device may determine the provision image (e.g., 310) to be provided through the display, which has been changed (e.g., reduced or enlarged) in the size (or the length) thereof, based on the area (or the length) of the viewing area, as the recognition image.

In operation 850, the provision module 177 may map the recognition image (e.g., the first recognition part 571) with the corresponding area of the display (e.g., the first subarea 531). According to an embodiment, the electronic device may map a part of the recognition image with a partial area of the display, based on the area (or the length) of the viewing area with respect to the partial area of the display.

In operation 860, the provision module 177 may correct the recognition image, based on the area (or length) of the mapped area of the display. According to an embodiment, the electronic device may change (e.g., enlarge or reduce) a part of the recognition image, which is mapped with the display area, to correspond to the area of the display area.

In operation 870, the provision module 177 may provide the corrected recognition image (e.g., the adjustment image 510) through the mapped display area.

According to various embodiments, a method for processing an image may include: in an electronic device (e.g., the electronic device 100 or 200), identifying a degree of bending (e.g., the third angle 565) of a display (e.g., the display 230) that is functionally connected with the electronic device; and providing an adjustment image (e.g., the adjustment image 510) given by changing at least a part (e.g., the third mapping part 615) of a provision image (e.g., the provision image 310), which is to be provided through the display, through the display, based on the degree of bending, wherein the operation of providing comprises, if the degree of bending is the first degree of bending (e.g., about 30 degrees), enlarging or reducing the at least a part at the first ratio (e.g., enlarging the same about 1.2 times), and if the degree of bending is the second degree of bending (e.g., about 45 degrees), enlarging or reducing the at least a part at the second ratio (e.g., enlarging the same about 1.5 times).

According to various embodiments, the operation of identifying may be performed in response to obtainment of the provision image. For example, the provision image may be obtained when the display is converted from an inactive state to an active state. In this case, the electronic device may identify the degree of bending in response to the obtainment of the provision image.

According to various embodiments, the operation of identifying may comprise identifying the degree of bending according to a predetermined period (e.g., once a minute).

According to various embodiments, the degree of bending may be automatically determined based on applications executed in the electronic device, or a surrounding environment thereof. For example, when an e-mail application is executed in the electronic device, the display may be bent at a predetermined angle (e.g., 90 degrees). In addition, if the intensity of illumination is low (e.g., about 10 lux) around the electronic device, the display may be transformed into a cylindrical shape.

According to various embodiments, when the degree of bending (e.g., about 30 degrees) is changed into another degree of bending (e.g., about 45 degrees), the operation of identifying may include identifying another degree of bending.

According to various embodiments, the operation of providing may include changing the at least a part of the provision image at a different ratio (e.g., about 1.5 times) according to another degree of bending.

According to various embodiments, the display may include the first area (e.g., the fourth subarea 537), and the second area (e.g., the third subarea 535) that is bent at least in part with respect to the first area, and the operation of providing may include changing the first part (e.g., the fourth mapping part 617) of the provision image, which corresponds to the first area, and the second part (e.g., the third mapping part 615) of the provision image, which corresponds to the second area, to be different from each other. For example, the electronic device may reduce the first part at the first ratio (e.g., about 0.8 times), and may reduce the second part at the second ratio (e.g., about 0.9 times).

According to various embodiments, the operation of changing may include changing the first part, based on a viewing area (e.g., the viewing area 557) corresponding to the first area, and changing the second part, based on a viewing area (e.g., the viewing area 555) corresponding to the second area.

According to various embodiments, the operation of providing may include a viewing area (e.g., the viewing area 250) corresponding to the display, based on the degree of bending.

According to various embodiments, the operation of obtaining may include determining the viewing area corresponding to the display, based on the user (e.g., the user 201 or 301) of the electronic device.

According to various embodiments, the operation of obtaining may include determining the viewing area, based on at least one piece of status information (e.g., a curvature or a direction of at least a partial area of the display) on the electronic device, or user information (e.g., information on the line of sight of the user). For example, the electronic device may determine the viewing area, based on a partial area (e.g., the reference area 231) of the display corresponding to the opposite direction of the earth center. In addition, the electronic device may determine the viewing area, based on a partial area (e.g., the reference area 231) of the display corresponding to the direction of the sight-line of the user.

According to various embodiments, the operation of determining may include determining a recognition image (e.g., the recognition image 470) for creating the adjustment image by enlarging or reducing the provision image at a predetermined ratio, based on the viewing area.

According to various embodiments, the operation of determining may include determining the recognition image module by enlarging or reducing the provision image, based on the ratio (e.g., 1:0.8) of at least a partial area of the display (e.g., the area where the provision image is to be output in the display), which corresponds to the provision image, to the viewing area.

According to various embodiments, the operation of providing may include determining a recognition image by enlarging or reducing the provision image, based on at least one of a size or a length of the viewing area.

According to various embodiments, the display may include the first area (e.g., the reference area 231), and the second area (e.g., the bent area 233) that is bent at a predetermined angle with respect to the first area, and the second area is flat or curved.

According to various embodiments, the second area (e.g., the bent area 233) may include the first subarea (e.g., the first subarea 531) and the second subarea (e.g., the second subarea 533), and the operation of providing may include changing the first part (e.g., the first mapping part 611) corresponding to the first subarea among the provision image, based on the first degree of bending (e.g., the first angle 561) of the first subarea, and changing the second part (e.g., the second mapping part 613) corresponding to the second subarea among the provision image, based on the second degree of bending (e.g., the second angle 563) of the second subarea.

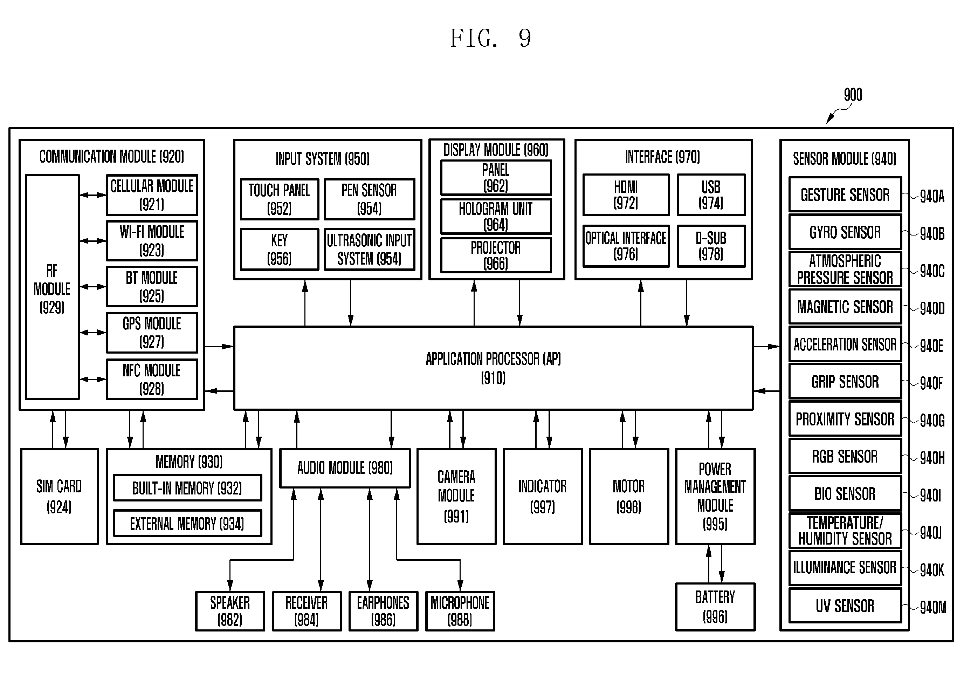

FIG. 9 is a block diagram illustrating a configuration of hardware, 900, according to an embodiment of the present disclosure. Hardware 900 is an example of the electronic device 100 illustrated in FIG. 1. As illustrated in FIG. 9, the hardware 900 may include one or more application processors (AP) 910, a Subscriber Identification Module (SIM) card 924, a communication module 920, a memory 930, a sensor module 940, an input module 950, a display module 960, an interface 970, an audio module (e.g., audio coder/decoder (codec)) 980, a camera module 991, a power management module 995, a battery 996, an indicator 997, a motor 998 and any other similar and/or suitable components.

The AP 910 (e.g., the processor) may include one or more Application Processors (APs), or one or more Communication Processors (CPs).

The AP 910 may execute an Operating System (OS) or an application program, and thereby may control multiple hardware or software elements connected to the AP 910 and may perform processing and arithmetic operations on various data including multimedia data. The AP 910 may be implemented by, for example, a System on Chip (SoC). According to various embodiments of the present disclosure, the AP 910 may further include a Graphical Processing Unit (GPU) (not illustrated).

The SIM card 924 may be a card implementing a subscriber identification module, and may be inserted into a slot formed in a particular portion of the electronic device 100. The SIM card 924 may include unique identification information (e.g., Integrated Circuit Card IDentifier (ICCID)) or subscriber information (e.g., International Mobile Subscriber Identity (IMSI)).

The communication module 920 may be, for example, the communication module 160 illustrated in FIG. 1. The communication module 920 may include a Radio Frequency (RF) module 929. The communication module 920 may further include, for example, a cellular module 921, a Wi-Fi module 923, a Bluetooth (BT) module 925, a GPS module 927, a Near Field Communications (NFC) module 928. For example, the communication module 920 may provide a wireless communication function by using a radio frequency. Additionally or alternatively, the communication module 920 may include a network interface (e.g., a Local Area Network (LAN) card), a modulator/demodulator (modem), and/or the like for connecting the hardware 900 to a network (e.g., the Internet, a LAN, a Wide Area Network (WAN), a telecommunication network, a cellular network, a satellite network, a Plain Old Telephone Service (POTS), and/or the like).

The cellular module 921 may further include a Communication Processor (CP). The CP may control the transmission and reception of data by the communication module 920. As illustrated in FIG. 9, the elements such as the CP, the power management module 995, the memory 930, and the like are illustrated as elements separate from the AP 910. However, according to various embodiments of the present disclosure, the AP 910 may include at least some (e.g., the CP) of the above-described elements. The CP may manage a data line and may convert a communication protocol in the case of communication between the electronic device (e.g., the electronic device 100) including the hardware 200 and different electronic devices connected to the electronic device through the network.

The RF module 929 may be used for transmission and reception of data, for example, transmission and reception of RF signals or called electronic signals. Although not illustrated, the RF unit 929 may include, for example, a transceiver, a Power Amplifier Module (PAM), a frequency filter, a Low Noise Amplifier (LNA), and/or the like.

In addition, the RF module 929 may further include a component for transmitting and receiving electromagnetic waves in a free space in a wireless communication, for example, a conductor, a conductive wire, or the like.

The memory 930 may include an internal memory 932 and an external memory 934. The memory 930 may be, for example, the memory 130 illustrated in FIG. 1. According to various embodiments of the present disclosure, internal memory 932 may include, for example, at least one of a volatile memory (e.g., a Dynamic Random Access Memory (DRAM), a Static RAM (SRAM), a Synchronous Dynamic RAM (SDRAM), and/or the like), and a non-volatile memory (e.g., a One Time Programmable Read-Only Memory (OTPROM), a Programmable ROM (PROM), an Erasable and Programmable ROM (EPROM), an Electrically Erasable and Programmable ROM (EEPROM), a mask ROM, a flash ROM, a Not AND (NAND) flash memory, a Not OR (NOR) flash memory, and/or the like). According to various embodiments of the present disclosure, the internal memory 932 may be in the form of a Solid State Drive (SSD). The external memory 934 may further include a flash drive, for example, a Compact Flash (CF), a Secure Digital (SD), a Micro-Secure Digital (Micro-SD), a Mini-Secure Digital (Mini-SD), an extreme Digital (xD), a memory stick, and/or the like.

The sensor module 940 may include, for example, at least one of a gesture sensor 940A, a gyro sensor 940B, an atmospheric pressure sensor 940C, a magnetic sensor 940D, an acceleration sensor 940E, a grip sensor 940F, a proximity sensor 940G, a Red, Green and Blue (RGB) sensor 940H, a biometric sensor 9401, a temperature/humidity sensor 940J, an illuminance sensor 940K, and a Ultra Violet (UV) sensor 940M. The sensor module 940 may measure a physical quantity and/or may detect an operating state of the electronic device 100, and may convert the measured or detected information to an electrical signal. Additionally/alternatively, the sensor module 940 may include, for example, an E-nose sensor (not illustrated), an ElectroMyoGraphy (EMG) sensor (not illustrated), an ElectroEncephaloGram (EEG) sensor (not illustrated), an ElectroCardioGram (ECG) sensor (not illustrated), a fingerprint sensor (not illustrated), and/or the like. Additionally or alternatively, the sensor module 940 may include, for example, an E-nose sensor (not illustrated), an EMG sensor (not illustrated), an EEG sensor (not illustrated), an ECG sensor (not illustrated), a fingerprint sensor, and/or the like. The sensor module 940 may further include a control circuit (not illustrated) for controlling one or more sensors included therein.

The input module 950 may include a touch panel 952, a pen sensor 954 (e.g., a digital pen sensor), keys 956, and an ultrasonic input unit 958. The input module 950 may be, for example, the user input module 140 illustrated in FIG. 1. The touch panel 952 may recognize a touch input in at least one of, for example, a capacitive scheme, a resistive scheme, an infrared scheme, an acoustic wave scheme, and the like. In addition, the touch panel 952 may further include a controller (not illustrated). In the capacitive type, the touch panel 952 is capable of recognizing proximity as well as a direct touch. The touch panel 952 may further include a tactile layer (not illustrated). In this event, the touch panel 952 may provide a tactile response to the user.

The pen sensor 954 (e.g., a digital pen sensor), for example, may be implemented by using a method identical or similar to a method of receiving a touch input from the user, or by using a separate sheet for recognition. For example, a key pad or a touch key may be used as the keys 956.

The ultrasonic input unit 958 enables the terminal to detect a sound wave by using a microphone (e.g., a microphone 988) of the terminal through a pen generating an ultrasonic signal, and to identify data. The ultrasonic input unit 958 is capable of wireless recognition. According to various embodiments of the present disclosure, the hardware 900 may receive a user input from an external device (e.g., a network, a computer, a server, and/or the like), which is connected to the communication module 930, through the communication module 930.

The display module 960 may include a panel 962, a hologram 964, a projector 966, and/or the like. The display module 960 may be, for example, the display module 150 illustrated in FIG. 1. The panel 962 may be, for example, a Liquid Crystal Display (LCD) and an Active Matrix Organic Light Emitting Diode (AM-OLED) display, and/or the like. The panel 962 may be implemented so as to be, for example, flexible, transparent, or wearable. The panel 962 may include the touch panel 952 and one module. The hologram 964 may display a three-dimensional image in the air by using interference of light. According to various embodiments of the present disclosure, the display module 960 may further include a control circuit for controlling the panel 962 or the hologram 964.

The interface module 970 may include an High-Definition Multimedia Interface (HDMI) module 972, a Universal Serial Bus (USB) module 974, an optical interface module 976, a D-subminiature (D-SUB) module 978, and/or the like. Additionally or alternatively, the interface 970 may include, for example, one or more interfaces for Secure Digital (SD)/MultiMedia Card (MMC) (not shown) or Infrared Data Association (IrDA) (not shown). The interface module 970 or any of its sub-modules may be configured to interface with another electronic device (e.g., an external electronic device), an input device, an external storage device, and/or the like.

The audio module 980 may encode/decode voice into electrical signal, and vice versa. The audio module 980 may, for example, encode/decode voice information that are input into, or output from, a speaker 982, a receiver 984, an earphone 986, and/or a microphone 988.

The camera module 991 may capture still images or video. According to various embodiments of the present disclosure, the camera module 991 may include one or more image sensors (e.g., front sensor module or rear sensor module; not shown), an Image Signal Processor (ISP, not shown), or a flash Light-Emitting Diode (flash LED, not shown).

The power management module 995 may manage electrical power of the hardware 900. Although not shown, the power management module 995 may include, for example, a Power Management Integrated Circuit (PMIC), a charger Integrated Circuit (charger IC), a battery fuel gauge, and/or the like.

The PMIC, for example, may be disposed in an integrated circuit or an SoC semiconductor. The charging method for the hardware 900 may include wired or wireless charging. The charger IC may charge a battery, or prevent excessive voltage or excessive current from a charger from entering the hardware 900. According to various embodiments of the present disclosure, the charger IC may include at least one of a wired charger IC or a wireless charger IC. The wireless charger IC may be, for example, a magnetic resonance type, a magnetic induction type or an electromagnetic wave type, and may include circuits such as, for example, a coil loop, a resonance circuit or a rectifier.

The battery gauge may measure, for example, a charge level, a voltage while charging, a temperature of battery 996, and/or the like. The battery 996 may supply power to, for example, the hardware 900. The battery 996 may be, for example, a rechargeable battery.

The indicator 997 may indicate one or more states (e.g., boot status, message status or charge status) of the hardware 900 or a portion thereof (e.g., the AP 911). The motor 998 may convert electrical signal into mechanical vibration. MCU 999 may control the sensor module 940.

Although not illustrated, the hardware 900 may include a processing unit (e.g., a Graphics Processing Unit (GPU)) for supporting a module TV. The processing unit for supporting a module TV may process media data according to standards such as, for example, Digital Multimedia Broadcasting (DMB), Digital Video Broadcasting (DVB), media flow, and/or the like.

According to various embodiments of the present disclosure, each of the above-described elements of the hardware 900 may include one or more components, and the name of the relevant element may change depending on the type of electronic device. According to various embodiments of the present disclosure, the hardware 900 may include at least one of the above-described elements. Some of the above-described elements may be omitted from the hardware 900, or the hardware 900 may further include additional elements. In addition, according to various embodiments of the present disclosure, some of the elements of the hardware 900 may be combined into one entity, which may perform functions identical to those of the relevant elements before the combination.

The term "module" used in embodiments of the present invention may refer to, for example, a "unit" including one of hardware, software, and firmware, or a combination of two or more thereof. The term "module" may be interchangeable with a term such as a unit, a logic, a logical block, a component, or a circuit. The "module" may be a minimum unit of an integrated component or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. When the command is executed by one or more processors (for example, the processor 122), the one or more processors may execute a function corresponding to the command. The computer-readable storage medium may be, for example, the memory 130. At least a part of the programming module may be implemented (for example, executed) by, for example, the processor 1510. At least a part of the programming module may include, for example, a module, a program, a routine, a set of instructions and/or a process for performing one or more functions.

The computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, programming module), such as a Read Only Memory (ROM), a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present invention may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed in a different order, some of the operations may be omitted, or other operations may be added.

According to various embodiments, a recording medium may store instructions that are executed by at least one processor to allow the processor to perform at least one operation, and the operation may include: in an electronic device, identifying a degree of bending of a display that is functionally connected with the electronic device; and providing an adjustment image given by changing at least a part of a provision image, which is to be provided through the display, through the display, based on the degree of bending, wherein the providing comprises, if the degree of bending is the first degree of bending, enlarging or reducing the at least a part at the first ratio, and if the degree of bending is the second degree of bending, enlarging or reducing the at least a part at the second ratio.

Embodiments of the present disclosure provided in this document and drawings are merely certain examples to readily describe the technology associated with embodiments of the present disclosure and to help understanding of the embodiments of the present disclosure, but may not limit the scope of the embodiments of the present disclosure. Therefore, in addition to the embodiments disclosed herein, the scope of the various embodiments of the present disclosure should be construed to include all modifications or modified forms drawn based on the technical idea of the various embodiments of the present disclosure.

## Claims

1. A method performed by an electronic device having a display, the method comprising:
identifying a degree of bending of the display; and
generating and outputting through the display an adjustment image by changing at least a part of a provision image otherwise output through the display in a reference state, the change being based on the degree of bending.

2. The method of claim 1, wherein the reference state is a generally flat state of the display, and the identifying is performed in response to obtainment of the provision image.

3. The method of claim 1, wherein the identifying comprises identifying a first degree of bending at a first point of the display and identifying a second degree of bending at a second point of the display, and wherein the adjustment image is based on the first and second degrees of bending.

4. The method of claim 3, wherein a ratio of a size of visual elements of the adjustment image to corresponding visual elements of the provision image is set, based on the first and second degrees of bending, to a first value at a first area of the display and a second value at a second area of the display.

5. The method of claim 1, wherein the display includes a first area, and a second area that is bent at least in part with respect to the first area, and the generating comprises changing a first part of the provision image, which corresponds to the first area, and a second part of the provision image, which corresponds to the second area, to be different from each other.

6. The method of claim 5, wherein the changing comprises changing the first part, based on a viewing area corresponding to the first area, and changing the second part, based on a viewing area corresponding to the second area.

7. The method of claim 1, wherein the generating comprises obtaining a viewing area corresponding to the display, based on the degree of bending.

8. The method of claim 7, wherein the generating comprises determining a recognition image for creating the adjustment image by enlarging or reducing the provision image at a predetermined ratio, based on the viewing area.

9. The method of claim 8, wherein the determining comprises enlarging or reducing the provision image, based on the ratio of at least a partial area of the display, which corresponds to the provision image, to the viewing area, to determine the recognition image.

10. An electronic device comprising:
a display; and
an image processing module configured to identify a degree of bending of the display, generate and output through the display an adjustment image by changing at least a part of a provision image otherwise output through the display in a reference state, the change being based on the degree of bending.

11. The electronic device of claim 10, wherein the reference state is a generally flat state the display, and the image processing module identifies the degree of bending according to at least one predetermined range.

12. The electronic device of claim 10, wherein the display includes a first area, and a second area which is bent at least in part with respect to the first area, and the image processing module changes a first part of the provision image, which corresponds to the first area, and a second part of the provision image, which corresponds to the second area, to be different from each other.

13. The electronic device of claim 12, wherein the image processing module changes the first part, based on a viewing area corresponding to the first area, and changes the second part, based on a viewing area corresponding to the second area.

14. The electronic device of claim 10, wherein the display includes a first area, and a second area that is bent at a predetermined angle with respect to the first area, and the second area is flat or curved.

15. The electronic device of claim 14, wherein the second area includes a first sub area and a second sub area, and the image processing module changes a first part corresponding to the first sub area of the provision image, based on a first degree of bending of the first sub area, and changes a second part corresponding to the second sub area of the provision image, based on a second degree of bending of the second sub area.
